# EUROPEAN PATENT SPECIFICATION

(11) **EP 0 484 493 B1**
(45) Date of publication and mention of the grant of the patent: **21.08.1996**
(21) Application number: 91909808.7
(22) Date of filing: 10.05.1991
(51) Int. Cl.: B27G 21/00

(54) **AUTOMATIC GUARDING OF ROTATING CUTTERS**
AUTOMATISCHER SCHUTZ VON RUNDLAUFENDEN WERKZEUGEN
PROTECTION AUTOMATIQUE DE LAMES-FRAISES ROTATIVES

(30) Priority: 25.05.1990 GB 9011723
(43) Date of publication of application: 13.05.1992
(73) Proprietor: KARP, Stefan, Rushden, Northants NN10 0XA (GB)
(72) Inventor: KARP, Stefan, Rushden, Northants NN10 0XA (GB)
(86) International application number: GB9100750
(87) International publication number: WO9118724

(56) References cited:
- CH-A- 426 210
- DE-A- 2 107 139
- DE-U- 8 602 800
- FR-A- 369 448
- FR-A- 1 106 176
- US-A- 1 829 313

## Description

This invention relates to means for the guarding of rotating cutters such as are used for the machining of faces to various geometries by copying principles. In particular but not exclusively the invention may be applied to the guarding of cutters on hand-fed surface planing machines whether or not the machines are fitted with thicknessers.

The guarding of the cutters results in increased safety for human operators. An automatic guarding of rotating cutters has become known for example from the document CH-A-426 210. This prior art is acknowledged by the preamble of appended claim 1. The present invention is defined by means of the features as indicated in this claim 1. Preferred embodiments of the invention are defined in claims 2-9.

The invention may be usefully embodied in a variety of forms and for a variety of subsidiary purposes. Without limitation, its operation may be entirely automatic, it may be incorporated in new host cutting machines or may be retro-fitted to old machines, it may also decrease noise levels or levels of dust output caused by the operation of the host machine.

The invention resides an automatic guarding of rotating cutters as defined in Claim 1.

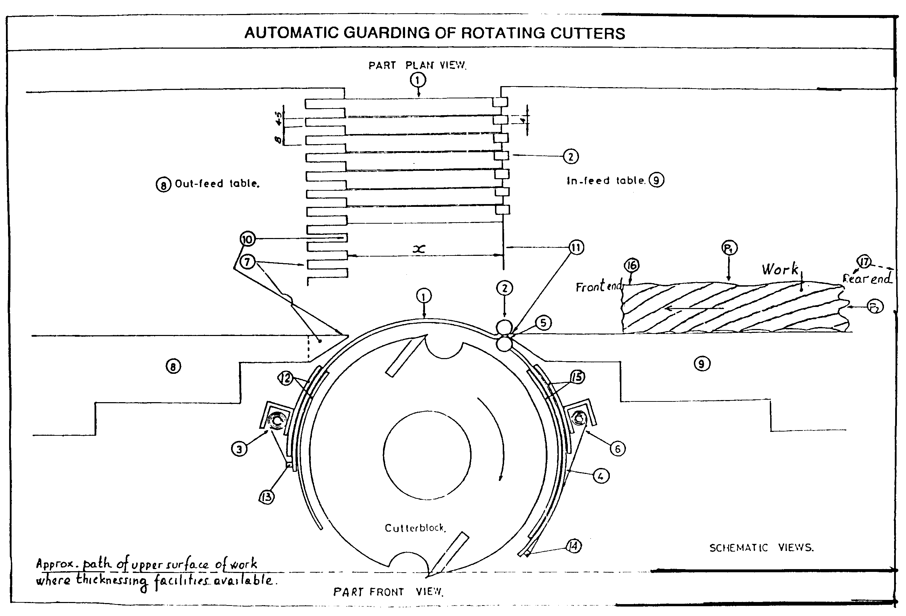

The attached drawing containing Part Front and Part Plan views illustrates how in a simple form the invention provides near 100% guarding of the rotating cutters of a hand-fed wood-planing machine such as to provide a significant increase in operator safety through shielding the hands of an operator from contact with the cutters. No other known form of safety guard is capable of providing this level of safety.

The attached drawing does not illustrate in detail the thicknessing function of typical wood-planing machines, as the use of a thicknesser does not detract from the fundamental function and purpose of the invention.

The process of hand-fed wood-planing is now described as this will assist in illustrating the purpose and application of the invention. The attached drawing may be referred to.

As shown on the drawing, a piece of wood (marked "Work") is pushed by hand, with or without protective media on the hand(s), from in-feed table (9) to out-feed table (8). The height of table (8) is set so that during operation it will be kept on a horizontal plane tangential with the cutting edges of the blades on the rotating cutterblock. The height of table (9) will therefore be set for operation below that of table (8) by an amount of at least the minimum believed to be necessary for the removal of undulations and imperfections in the piece of wood. The action of this setting during adjustment is such that edge (11) of table (9) moves tangentially to an imaginary circle (whose centre is the centre of the cutterblock) maintaining clearance between itself and the rotating cutter blades. The invention allows for this movement of table (9).

On the Part Front view shown on the attached drawing the invention is illustrated as the pair of spring-loaded assemblies whose component parts are variously labelled as (reading clockwise) (1), (2), (5), (15), (6), (4), (14), (13), (3) and (12). However regardless of the presence of this or any other safety device, the operator in order to plane the piece of wood illustrated will apply a force (P1) downwards with the left hand and a force (P2) forwards with the right hand. In order to maintain a level cut, the hand applying (P1) will not move forward beyond edge (11) until the front end (16) of the wood passes edge (10) on table (8).

The straightness and flatness of the planing work is then copied from table (8) which is itself in close horizontal alignment with the cutterblock blades. Thus (P1) will be transferred to table (8) as soon as front edge (16) has passed edge (10). Throughout and until completion of the planing along the length of the piece of wood, (P2) will have been applied at rear end (17). It will be appreciated how in rapid (or otherwise) working of the planing machines, the hands are at risk, in the absence of a guarding system such as that illustrated, of inadvertently coming in contact with the cutterblock blades and receiving injury which may be serious and unpleasant.

The embodiment of the invention illustrated in the Part Front and Part Plan views, whose various component parts were listed above, comprises and operates as a pair of opposing arrays of spring-loaded arms, which, when the host planing machine is not in use, guard the cutterblock entirely and which, when the host machine is in use, are displaced only in close conformity to the movement and actual position of the piece of wood being planed.

In the illustration these arms (components (1) and (4)), are curved strips of good strength material guided by guide-pairs (12) and (15). The number of these arms will vary according to the width (as viewed from the origin of force (P2)) of the cutterblock and their maximum advisable individual width for safety purposes is presently assessed as no greater than 8mm (eight millimetres).

In the embodiment illustrated, when the host machine is not in use, front ends (2) or arms (1). directed by guide-pairs (12), are held in contact with edge (11) of table (9) by a force applied at their rear ends (13) by springs (3). When the host machine is in use, work pushes arms (1) backwards. For example work of width up to 8mm wide will tend to displace one arm only, work of between 8mm and 16mm wide will tend to displace two arms, and so on. When the rear end (17) of the work passes edge (11), one or more of arms (4), in total width relating to the width of the work, will, guided by guide-pairs (15) and propelled at their ends (14) by springs (6), follow the rear end (17) in close conformity to it until rear end (17) passes over edge (10) of table (8). The design safety constraints on the widths of arms (4) are the same as for arms (1) and the width of each arms (4) will be equal in operation to the width of arms (1) and each arm (4) will be directly in line to an opposing arm (1). Springs (3) having greater strength than springs (6), once the rear end (17) of the work has passed sufficiently clear of edge (10) to allow their passage, any displaced arms (1) will force their corresponding arms (4) back over the rotating cutterblock, thus maintaining a continued guard over the cutterblock, and both arrays of arms (1) and (4) will revert to their undisplaced positions as illustrated.

It will thus be seen that for simplicity of illustration in the embodiment as illustrated and also for simplicity of prototype making, when no planing activity is taking place arms (1) are kept with their ends (2) in contact with edge (11) of table (9) by the force of springs (3) attached individually to each of the arms (1) at attachment points (13). Similarly arms (4) are maintained with their ends (5) in contact with the ends (2) of arms (1) by springs (6) of lesser force than springs (3), with springs (6) attached to arms (4) at attachment points (14). It will be appreciated that a number of means other than the use of springs exist for applying force to arms (1) and (4) such as to maintain their guarding of the cutterblock. Such alternative means would include without limitation gravity and electro-magnetic force.

It will be seen from the embodiment illustrated that when work is fully spanning the danger distance (x), from edge (11) of table (9) to edge (10) of table (8), ends (2) of each of arms (1) which have been displaced by the work will be kept by the force (P1) below the upper surface of table (8) in the vicinity of edge (10). Similarly ends (5) of each of arms (4) above which the work is passing will be kept below the surface of table (9) in the vicinity of edge (11) by force (P1). Ends (2) and (5) are constructed from a material or construction of suitably low coefficient of friction to allow easy passage of the work and as seen in the embodiment illustrated have widths of approximately one-half of the arms (1) and (4). This width allows in particular for the withdrawal of ends (2) on arms (1) through slots (7) on edge (10) of table (8). We note this point having regard to the design of wood-planing machines of which slots (7) are often a feature.

As the rear end (17) of the work passes over edge (10) of out-feed table (8), any arms (1) displaced by the work in its passage will be freed from pressure (P1) and, propelled by springs (3), will revert to their former position with their ends (2) in contact with edge (11) of table (9). Any of arms (4) which had, propelled by springs (6) of lesser force than springs (3), followed the rear end (17) of the work over the cutterblock, will be returned by the action of the returning arms (1) to the equilibrium position illustrated with their ends (5) adjacent to edge (11).

In that arms (1) which were not displaced by the movement of the work stayed in their equilibrium position throughout the movement of the work, virtual 100% guarding of the blades on the cutterblock is maintained throughout the planing process.

It will be appreciated that the curvature of the arms (1) and (4), the guiding of them by guide-pairs (12) and (15) and the precise spatial relationship between the two opposing assemblies of arms and the tables, do not require to be of the precise form in the illustration. For example, in the various potential embodiments of the invention, account may be taken, without limitation, of any particularities of the host machine in which the invention is installed, or of any need for allowing or restricting passage of dust or waste matter.

With reference to the application of the embodiment under discussion applied to wood-planing machines, it is known that many planing machines provide a thicknessing facility whereby work may be fed under the cutterblock, as indicated in the illustration, in reverse direction to work fed over the top of the cutterblock. It will be clear that this operation may be carried out whilst arms (1) and (4) remain in either equilibrium or displaced positions and that this could provide potential advantages in diminution of passage of waste through span (x) and dampening of sound. However there are circumstances in which waste will be required to be extracted through span (x), for example through standard extraction hoods, and in these circumstances it is envisaged that attachments can be provided, if necessary specific to individual types of planing machines, such as to cause the withdrawal of arms (1) whilst not allowing movement from equilibrium of arms (4). It is also envisaged that the facility to cause the withdrawal of arms (1) whilst arms (4) remain in equilibrium will be of use when the blades mounted on the cutterblock are replaced or reset.

It will however be appreciated that, when no thicknessing facility is fitted in the host planing machine, the structure of the invention allows readily for the extraction of waste and dust through the incorporation into the invention or its host machine of extraction channels as for example but without limitation, extensions of guide-pairs (12) and (15), employing conventional construction methods. Such advantages of masking or enabling the passage of waste or sound will apply also where the cutterblock rotates about a vertical axis, for example in the case of spindle moulding.

The invention is thus capable of being incorporated fully into the design of new host machines or of being fitted with suitable ancillary fittings or bracketry of conventional construction methods such as to allow tailoring it to the particular individual design features of older host machines.

It will also be appreciated that the invention is capable of providing substantial dampening of sound caused by the rotating cutterblock and the attached blades. The requirement for and advantages of this feature will vary according to the age and design of host machines. It is envisaged that in applications where its abilities to procure sound dampening is seen as the main function as opposed to virtual 100% guarding of the rotating cutterblock, the widths of arms (1) and (4) may be substantially increased, for example with a view to decreasing production costs by minimising the number of individual arms required to be fitted.

It will also be appreciated that other circumstances will exist where the width of arms (1) and (4) may satisfactorily be greater than 8mm and that embodiments of the invention may be created such as freely to accommodate these other circumstances.

The invention will therefore, regardless of the widths of arms (1) and (4) and regardless of methods used for applying force to these arms (shown in the attached illustration, for purposes of explanation only, as achieved through the use of springs fitted individually to each arm), and regardless of the fine details of its construction and mounting within a host machine, be capable of being employed with advantage in host machines, including special purpose host machines, for reasons including all or any of its capabilities for automatic operation, for provision of very high levels of operator safety, for sound dampening and for waste and dust guidance.

## Claims

1. An automatic guarding of rotating cutters by means of primary and secondary sets of curved strips (1, 4) the primary strips (1) being displaced from their normal equilibrium safe position on a circular path by the work (16, 17) that is subjected to two simultaneous vertical and horizontal forces against circumferential forces acted on the primary strips (1) by suitable force sources (3); when the end of the work has passed a position at the end of the infeed table the corresponding secondary strip (4) or strips that have been kept in their otherwise equilibrium position by the work (16, 17) applied vertical force under their own acting circumferential forces (6) follow the work, thus providing safe cover over the rotating cutters until the end of the work has reached a position when no vertical force is acted upon the primary strips (1), characterised in that the tips (2, 5) of the two sets (1, 4) of strips are abutting each other when no work is present; the two sets are guided each in a circular path by guide pairs (12, 15); the circumferential force (3) of the primary strips (1) is greater than the opposed circumferential forces (6) of the secondary strips (4); the tip (2) of the primary strips has a curved end abutting in rest the edge (11) of the infeed table (9) adjacent the rotating cutters.

2. An automatic guarding of rotating cutters according to claim 1 wherein the width and the circumferential force sources of the primary will vary depending upon the construction of the cutter to be guarded.

3. An automatic guarding of rotating cutters according to Claims 1 and 2 wherein irrespective of the width relationship of primary to work the safe guarding of rotating cutters is automatically achieved by the secondary that are not kept in their otherwise equilibrium position by the work applied vertical force and/or the ones that are following the work.

4. An automatic guarding of rotating cutters according to any preceding claim wherein the axis of rotation of cutters may lay in any spatial plane.

5. An automatic guarding of rotating cutters according to any preceding claim wherein in the case of hand-fed wood planers with thicknessing facilities the invention applies as well with practically no modification to the construction of the automatic guarding.

6. An automatic guarding of rotating cutters according to any preceding claim wherein the invention applies to hand as well as power-fed operations.

7. An automatic guarding of rotating cutters according to any preceding claim wherein the invention does not unduly impede the efficient and safe removal and/or replacing of cutter blades and in the case of hand-fed wood planers and similar in setting the in-feed and out-feed tables to their safe required heights relative to the cutter blades.

8. An automatic guarding of rotating cutters according to any preceding claim wherein the invention promises some reduction in noise hence it may primarily, in a simplified construction, be employed for this important ability in addition to its safe-guarding function.

9. An automatic guarding of rotating cutters according to any preceding claim wherein the invention has shown an improvement in dust, shavings, waste matter and similar extraction and/or collection by controlled deflection of such waste efficiently, in the particular example, irrespective if cutting is done above (conventional) or below (thicknessing) of cutter.

## Patentansprüche

1. Vorrichtung zum automatischen Schutz von rundlaufenden Schneidwerkzeugen mit Hilfe eines primären und eines sekundären Satzes von gekrümmten Bändern (1, 4), wobei die Primärbänder (1) von ihrer normalen Gleichgewichts-Sicherheitsposition durch das Werkstück (16, 17), das zwei gleichzeitigen senkrechten und waagerechten Kräften entgegen den Umfangskräften ausgesetzt wird, die durch geeignete Kraftquellen (3) auf die Primärbänder (1) aufgebracht werden, über einen kreisförmigen Weg verschoben werden; wenn das Ende des Werkstückes eine Position am Ende des Zustelltisches passiert hat, dann folgen ein oder mehrere entsprechende Sekundärbänder (4), die ihre sonstige Gleichgewichtsposition beibehalten haben, auf Grund der durch das Werkstück (16, 17) aufgebrachten senkrechten Kraft, unter ihren eigenwirkenden Umfangskräften (6) dem Werkstück, wodurch eine sichere Abdeckung der rundlaufenden Schneidwerkzeuge entsteht, bis das Ende des Werkstückes eine Position erreicht hat, in der keine senkrechte Kraft auf die Hauptbänder (1) einwirkt, dadurch gekennzeichnet, daß die Spitzen (2, 5) der beiden Sätze (1, 4) von Bändern aneinander anstoßen, wenn kein Werkstück vorhanden ist; die beiden Sätze jeweils auf einem kreisförmigen Pfad durch Führungspaare (12, 15) geführt werden; die Umfangskraft (3) der Primärbänder (1) größer ist als die entgegengesetzten Umfangskräfte (6) der Sekundärbänder (4); die Spitze (2) der Primärbänder ein gekrümmtes Ende aufweist, das im Ruhezustand an die Kante (11) des Zustelltisches (9) neben den rundlaufenden Schneidwerkzeugen anstößt.

2. Vorrichtung zum automatischen Schützen von rundlaufenden Schneidwerkzeugen nach Anspruch 1, wobei die Breite und die Umfangskraftquellen der Primärstreifen von der Konstruktion des zu schützenden Schneidwerkzeuges abhängig sind.

3. Vorrichtung zum automatischen Schützen von rundlaufenden Schneidwerkzeugen nach Anspruch 1 und 2, wobei unabhängig vom Breitenverhältnis des Primärbandes zum Werkstück der sichere Schutz der rundlaufenden Schneidwerkzeuge automatisch durch die Sekundärbänder erzielt wird, die auf Grund der durch das Werkstück aufgebrachten senkrechten Kraft und/oder die Bänder erzielt wird, die dem Werkstück folgen.

4. Vorrichtung zum automatischen Schützen von rundlaufenden Schneidwerkzeugen nach einem der vorhergehenden Ansprüche, wobei die Rotationsachse der Schneidwerkzeuge in jeder beliebigen räumlichen Ebene liegen kann.

5. Vorrichtung zum automatischen Schützen von rundlaufenden Schneidwerkzeugen nach einem der vorhergehenden Ansprüche, wobei bei handbetriebenen Holzhobelmaschinen mit Dickenhobeln die Erfindung genauso gut praktisch ohne Modifikation der Konstruktion der automatischen Schutzvorrichtung anwendbar ist.

6. Vorrichtung zum automatischen Schützen von rundlaufenden Schneidwerkzeugen nach einem der vorhergehenden Ansprüche, wobei die Erfindung auf handbetriebene und kraftbetriebene Vorgänge anwendbar ist.

7. Vorrichtung zum automatischen Schützen von rundlaufenden Schneidwerkzeugen nach einem der vorhergehenden Ansprüche, wobei die Erfindung das effiziente und sichere Entfernen und/oder Wiedereinsetzen von Schneidklingen und bei handbetriebenen Holzhobelmaschinen und dergleichen das Einstellen des Zustelltisches und des Ausgabetisches auf ihre sicherheitstechnisch geforderten Höhen relativ zu den Schneidklingen nicht unangemessen behindert.

8. Vorrichtung zum automatischen Schützen von rundlaufenden Werkzeugen nach einem der vorhergehenden Ansprüche, wobei die Erfindung eine Schallreduzierung verspricht, da sie, in einer vereinfachten Konstruktion, über ihre Schutzfunktion hinaus hauptsächlich aufgrund dieser wichtigen Fähigkeit eingesetzt werden kann.

9. Vorrichtung zum automatischen Schützen von rundlaufenden Schneidwerkzeugen nach einem der vorhergehenden Ansprüche, wobei die Erfindung Verbesserungen beim Abführen und/oder Sammeln von Staub, Spänen, Abfall und dergleichen durch effiziente und geregelte Abführung solchen Abfalls gezeigt hat, in diesem Beispiel unabhängig davon, ob der Schneidbetrieb oberhalb (konventionell) oder unterhalb (Dickenhobel) des Schneidwerkzeuges durchgeführt wurde.

## Revendications

1. La protection automatique des lames-fraises rotatives par le moyen de jeux primaire et secondaire de bandes courbes (1 et 4), les bandes primaires (1) se déplaçant de leur position fixe d'équilibre sur une course circulaire près de la pièce (16 et 17) soumise simultanément à deux pressions, une verticale, l'autre horizontale, opposées aux pressions circulaires exercées sur les bandes primaires (1) par des unités de force appropriées (3); lorsque l'extrémité de la pièce dépasse une position donnée à l'extrémité du plateau d'avance en plongée, la ou les bande(s) secondaire(s) correspondante(s) (4) que la pièce (16 et 17) a retenue(s) dans sa/leur position d'équilibre par une pression verticale appliquée sous ses/leurs propres pressions circulaires (6) suivent la pièce, abritant donc les lames-fraises rotatives jusqu'à ce que la pièce atteigne le point auquel aucune pression verticale n'est exercée sur les bandes primaires (1) et se caractérisant par l'aboutement des pointes (2 et 5) des deux jeux (1 et 4) de bandes en l'absence d'une pièce à usiner; les deux jeux sont chacun dirigés le long d'une trajectoire circulaire par des doubles guides (12 et 15); la pression circulaire (3) exercée sur les bandes primaires (1) est supérieure aux pressions circulaires opposées (6) exercées sur les bandes secondaires (4); la pointe (2) des bandes primaires se finit en un crochet qui, au repos, aboute le bord (11) du plateau d'avance (9) adjacent aux lames-fraises rotatives.

2. La protection automatique des lames-fraises rotatives conformément à la Revendication 1 par laquelle la largeur et les unités de force circulaire des bandes primaires varient en fonction de la construction de la lame-fraise à protéger.

3. La protection automatique des lames-fraises rotatives conformément aux Revendications 1 et 2 par lesquelles, quel que soit le rapport de largeur des bandes primaires et de la pièce à usiner, la protection des lames-fraises rotatives est automatiquement assurée par les bandes secondaires qui ne sont pas maintenues dans leur position d'équilibre par la pression verticale appliquée par la pièce à usiner et/ou les forces qui la poussent.

4. La protection automatique des lames-fraises rotatives conformément aux revendications précédentes par lesquelles l'axe de rotation des lames-fraises peut adopter tout angle d'orientation.

5. La protection automatique des lames-fraises rotatives conformément aux revendications précédentes par lesquelles l'invention s'adapte aussi aux raboteuses à tirage d'épaisseur alimentées à la main, moyennant pratiquement aucune modification de construction de ladite protection automatique.

6. La protection automatique des lames-fraises rotatives conformément aux revendications précédentes par lesquelles l'invention s'adapte aussi bien aux machines à alimentation manuelle qu'aux machines à alimentation automatique.

7. La protection automatique des lames-fraises rotatives conformément aux revendications précédentes par lesquelles l'invention ne gêne pas indûment le démantèlement ou le remplacement sûr et efficace des lames-fraises ni, dans le cas des raboteuses alimentées à la main ou d'autres machines semblables, le réglage des plateaux d'avance et de sortie à leur hauteur de sécurité réglementaire par rapport aux lames-fraises.

8. La protection automatique des lames-fraises rotatives conformément aux revendications précédentes par lesquelles l'invention admet une certaine réduction du bruit qui lui permet d'être principalement employée, sous une forme simplifiée, pour remplir cette fonction importante outre sa fonction de protection.

9. La protection automatique des lames-fraises rotatives conformément aux revendications précédentes par lesquelles l'invention a prouvé optimiser l'extraction des poussières, copeaux, déchets et autres matières semblables et/ou leur récupération par leur acheminement efficace et contrôlé, dans cet exemple particulier, que l'opération de coupe soit effectuée au-dessus (méthode conventionnelle) ou au-dessous (tirage d'épaisseur) de la lame-fraise.
